# EUROPÄISCHE PATENTSCHRIFT

(11) **EP 3 124 309 B1**
(45) Veröffentlichungstag und Bekanntmachung des Hinweises auf die Patenterteilung: **15.08.2018**
(21) Anmeldenummer: 16001411.4
(22) Anmeldetag: 23.06.2016
(51) Int. Cl.: B60K 17/28, F16H 47/04, F16H 37/06

(54) **LANDWIRTSCHAFTLICHE ARBEITSMASCHINE MIT ZUMINDEST EINEM ANBAUGERÄT**
AGRICULTURAL MACHINE WITH AT LEAST ONE IMPLEMENT
MACHINE DE TRAVAIL AGRICOLE DOTÉE D'AU MOINS UN OUTIL PORTÉ

(30) Priorität: 28.07.2015 DE 102015009809
(43) Veröffentlichungstag der Anmeldung: 01.02.2017
(73) Patentinhaber: Grimme Landmaschinenfabrik GmbH & Co. KG, 49401 Damme (DE)
(72) Erfinder: Dettmer, Franz-Josef, 49577 Ankum (DE); Biemann, Christian, 49597 Rieste (DE)
(74) Vertreter: Deters, Frank

(56) Entgegenhaltungen:
- EP-A1- 1 554 920
- EP-A2- 0 026 115
- AT-U1- 11 366
- US-A- 5 950 502
- US-A1- 2003 162 619
- US-A1- 2014 039 756

## Beschreibung

Die Erfindung betrifft eine landwirtschaftliche Arbeitsmaschine nach dem Oberbegriff des Anspruchs 1.

Derartige landwirtschaftliche Arbeitsmaschinen sind insbesondere in Form von gezogenen Arbeitsmaschinen vorgesehen, wozu im Bereich primärer Antriebseinrichtungen insbesondere Schlepper eingesetzt werden. Im Stand der Technik sind unterschiedliche Formen einer Leistungsübertragung an einer Schlepper-Arbeitsmaschine-Schnittstelle vorgesehen. Dabei können die größten Antriebsmomente im Bereich mechanischer Zapfwellen auf die angehängte Arbeitsmaschine übertragen werden. In diesem Antriebsbereich besteht zwar die Möglichkeit, verschiedene Vorwahlstufen einzustellen, jedoch ist die abzweigbare Drehzahl abhängig von der Motordrehzahl am Schlepper, so dass damit eine stufenlose Verstellung für die gekuppelte Arbeitsmaschine nicht möglich ist.

An weiteren Ausführungen von Schleppern ist auch eine Leistungsabgabe für Anbaumaschinen und -geräte über einen als Power-Beyond-Anschluss definierten Verbinder vorgesehen. Diese Leistungsübertragung ist jedoch begrenzt, da hier Leitungsverluste als nachteilig zu beachten sind.

Aus US 2003/0162619 A1 ist ein im Bereich eines landwirtschaftlichen Schleppers einsetzbares Antriebssystem nach dem Oberbegriff des Anspruchs 1 ersichtlich, bei dem eine Planeteneinheit in den Getriebestrang des Abtriebsstrangs integriert ist, in der ein mechanischer Strang und ein mit einer hydraulischen Stellpumpe und einem Hydraulikmotor steuerbarer Hydraulikstrang zusammengeführt sind. Beide Stränge sind über ein Zwischengetriebe von einem gemeinsamen Antriebsstrang abgezweigt. Bei landwirtschaftlichen Arbeitsmaschinen sind Steuerungs- und Schaltfunktionen mit einer hydraulischen Stellpumpe nur schwerfällig ausführbar.

Die Erfindung befasst sich mit dem Problem, eine mit einer primären Antriebseinrichtung in Form eines Schleppers verbindbare landwirtschaftliche Arbeitsmaschine so auszubilden, dass jeweilige, an der Arbeitsmaschine vorgesehene Anbaugeräte mit hoher Leistung weitgehend verlustleistungsfrei einsetzbar sind und die jeweils zum Anbaugerät gerichteten Arbeitsabtriebe bei optimaler Verbindung zur primären Antriebseinrichtung einfach regelbar sind.

Die Erfindung löst diese Aufgabe mit einer landwirtschaftlichen Arbeitsmaschine mit den Merkmalen des Anspruchs 1. Weitere vorteilhafte Ausgestaltungen ergeben sich aus den Ansprüchen 2 bis 10.

Bei der Ausführung des Antriebskonzeptes ist das leistungsverzweigte Getriebe - ausgehend von einem der primären Antriebseinrichtung nachgeordneten Zwischengetriebe - aus einer Kombination eines an sich bekannten mechanischen Strangs und zumindest eines parallelen hydraulischen Abtriebs des Hydrauliksystems aufgebaut. Diese zwei "parallelen" Stränge des Systems wirken über zumindest ein Summierungsgetriebe auf den zumindest einen Arbeitsabtrieb des Anbaugerätes der gezogenen Arbeitsmaschine.

Ausgehend von dieser Grundkonfiguration kann das erweiterbare Konzept eines aufgelösten leistungsverzweigten Antriebs mit mehreren Abtrieben realisiert werden. In optimaler Ausführung wird mit dem leistungsverzweigten Getriebe mit geringem Aufwand eine Leistungssummierung von mechanischer Leistung, beispielsweise einer Zapfwelle, und einer zu dieser parallelen hydraulischen Leistung, ausgehend von einer Pumpen-Ventil-Komponente (Nutzung der Traktorhydraulik), erreicht. Diese Leistungssummierung kann prinzipiell auch nur an einem einzigen Arbeitsabtrieb realisiert werden; vorteilhaft ist jedoch die Anwendung dieser Leistungssummierung in Form einer Reihenanordnung von mehreren Abtrieben der landwirtschaftlichen Arbeitsmaschine vorgesehen. Die konstruktive Umsetzung ist darauf gerichtet, dass das leistungsverzweigte Getriebe mit der - in das Hydrauliksystem integrierten - Pumpe eine auf den einen oder mehrere der Arbeitsabtrieb(e) mit jeweiligen Summierungsgetriebe(n) wirkende Regeleinheit bildet.

Dabei ist vorgesehen, dass im landwirtschaftlichen Arbeitsbetrieb vorzugsweise eine konstante Drehzahl im Bereich der Zapfwelle auf ein Zwischengetriebe übertragbar ist. Von diesem aus wird das drehzahlkonstante Antriebsmoment mittels einer mechanischen Übertragung auf den ersten Leistungseingang eines - als Überlagerungsgetriebe ausgebildeten - Summierungsgetriebes geleitet. Von diesem aus erfolgt der als Arbeitsabtrieb nutzbare Endabtrieb im Bereich des jeweiligen Anbaugerätes der Arbeitsmaschine. Parallel zu diesem das Summierungsgetriebe betätigenden mechanischen Strang wird im Bereich des vorhandenen Hydrauliksystems die hydraulische Leistung aus einem insbesondere regelbaren hydraulischen Versorger (vorteilhaft aus dem Power-Beyond-Anschluss des Schleppers) über einen variabel ausführbaren Ventilblock zu einem im Bereich des Summierungsgetriebes befindlichen Motor geleitet, so dass von diesem aus ein zweiter Leistungseingang des Summierungsgetriebes beaufschlagt werden kann.

Im Bereich des vom Zwischengetriebe ausgehenden mechanischen Strangs ist die Anordnung mehrerer, eine Reihenanordnung bildender Summierungsgetriebe vorgesehen, wobei in diese jeweils der eine mit dem hydraulischen Strang verbundene Motor einmündet. Der Motor kann dabei mit einer im Bereich des leistungsverzweigten Getriebes vorgesehenen Pumpe angetrieben werden, wobei diese als Verstellpumpe oder Kontaktpumpe ausgebildet sein kann.

Eine praxisrelevante optimale Ausführung des leistungsverzweigten Getriebes sieht vor, dass dieses mit vorteilhaft verringertem Aufwand im Bereich des Hydrauliksystems mit nur einer Pumpe versehen wird. Dieser einen Pumpe sind am Ende des vorlaufenden Strangs des Hydrauliksystems mehrere der Summierungsgetriebe mit den jeweiligen Arbeitsabtrieben zugeordnet. Dabei ist vorgesehen, dass das leistungsverzweigte Getriebe im Bereich der nur einen Pumpe auslassseitig mit jeweiligen Wegeventilen ausrüstbar ist. Diese sind mit dem jeweiligen Motor im Bereich des Summierungsgetriebes verbindbar.

Im Bereich der Summierungsgetriebe ist die wahlweise Anordnung von Planetengetrieben oder Differentialgetrieben vorgesehen, so dass im Unterschied zu Standardgetrieben eingangsseitig ein zweiter Freiheitsgrad definiert ist, über den eine Variation der Drehzahl am jeweiligen Arbeitsabtrieb des Summierungsgetriebes möglich wird. Vorgesehen ist dabei, dass die Drehzahl dieses Motors im offenen Hydrauliksystem - zur vorgesehenen Regelung - variiert werden kann, während die Drehzahl im mechanischen Strang des Systems konstant gehalten ist.

Es hat sich gezeigt, dass die Ausbildung der landwirtschaftlichen Arbeitsmaschine mit dem erfindungsgemäßen leistungsverzweigten Getriebe eine nahezu beliebige Erweiterung mit Systemkomponenten - vorzugsweise im Bereich von gezogenen Kartoffel- und Rübenrodern - ermöglicht und damit die bisher aus dem Stand der Technik bekannten Probleme durch Leistungsverluste optimal ausgleichbar sind.

Bei praktischen Realisierungen dieser landwirtschaftlichen Arbeitsmaschine ist die komplexe Nutzung des leistungsverzweigten Getriebes mit offenem Hydrauliksystem und Summierungsgetriebe in Form einer mehrgliedrigen funktionalen Antriebseinheit vorgesehen. Diese verzweigende Einheit kann im Bereich von jeweils variabel nutzbaren Schnittstellen des Schlepper-Maschinen-Komplexes vollständig oder abschnittsweise an diesen angeschlossen bzw. von diesen getrennt werden.

Eine erste Variante sieht vor, dass das leistungsverzweigte Getriebe im Bereich jeweiliger, bereits an der primären Antriebseinrichtung im Bereich des Schleppers vorgesehener Ventile mit den Antriebssträngen zu den jeweiligen, dem Summierungsgetriebe zugeordneten Motoren hin gekoppelt wird. Bei dieser denkbaren Schnittstelle weist auch der auf die jeweiligen Summierungsgetriebe wirkende mechanische Strang eine trennbare bzw. kuppelbare Ausführung auf.

Eine zweite Variante sieht vor, dass ein Power-Beyond-Anschluss zwischen Antriebseinrichtung und Summierungsgetriebe des leistungsverzweigten Getriebes eine den erforderlichen Volumenstrom vor dem Bereich der Ventile erfassende zweite Schnittstelle bildet, in deren Bereich der eine mechanische Strang auch als trennbare bzw. kuppelbare Baugruppe vorgesehen ist.

Eine dritte Variante des komplexen Systems sieht vor, dass das leistungsverzweigte Getriebe mit einer im Bereich der Arbeitsmaschine vorgesehenen Eigenhydraulik ausgerüstet wird. Diese kann vorteilhaft über die Gelenkwelle antreibbar sein.

Ein wesentlicher Vorteil der erfindungsgemäß verbesserten landwirtschaftlichen Arbeitsmaschine besteht darin, dass die örtlich von dem System des leistungsverzweigten Getriebes trennbare Pumpe im Bereich der jeweiligen Summierungsgetriebe mit dem Motor des offenen Hydrauliksystems effizient zusammenwirkt. Dabei sind die - gemeinsam mit dem mechanischen Strang in einer "Parallelschaltung" zu betätigenden - Arbeitsabtriebe einfach regelbar und insbesondere auf unterschiedliche Arbeitsdrehzahlen einstellbar.

Als besonders vorteilhaft hat sich die Ausbildung der jeweiligen Summierungsgetriebe mit den bereits beschriebenen Differential- bzw. Planetengetrieben herausgestellt, wobei über den an eine Zapfwelle gekoppelten ersten Leistungseingang und dem jeweiligen zweiten Leistungseingang des hydraulisch gesteuerten Motors eine effiziente Regelstrecke aufgebaut wird. Das erfindungsgemäße System zeichnet sich dadurch aus, dass eine gemeinsame Nutzung eines mechanischen Strangs im Bereich eines oder mehrerer Summierungsgetriebe erfolgt und der zugeordnete hydraulische Leistungsanteil über nur eine offene - als Kreislaufpumpe wirkende - Pumpe und vorzugsweise ein oder mehrere Wegeschieberventile auf einen jeweiligen, kostengünstig als Konstantmotor bereitgestellten Motor übertragen werden kann. Aus diesem vergleichsweise einfachen und mit wenigen Komponenten auskommenden System ergeben sich variable Möglichkeiten der Abtriebsgestaltung, wobei die vergleichsweise geringen Kosten zur Ausrüstung derartiger landwirtschaftlicher Arbeitsmaschinen mit dem leistungsverzweigten Getriebe ein beachtliches Argument darstellen.

Die praktische Umsetzung hat gezeigt, dass neben den umfänglichen Möglichkeiten einer Erweiterung und Nachrüstung des Systems die Möglichkeit besteht, mit den vergleichsweise geringen Abmessungen der Komponenten auch den Raumbedarf zu minimieren. Im Vergleich mit herkömmlichen hydraulischen Antrieben ist eine Verbesserung des Gesamtwirkungsgrades der Arbeitsmaschine festzustellen, und bei Nutzung der in die Schlepperkomponenten integrierten Ventile ist eine Betätigung auch ohne Zapfwelle denkbar.

Weitere Einzelheiten und vorteilhafte Ausgestaltungen der Erfindung ergeben sich aus der nachfolgenden Beschreibung und der Zeichnung, in der mehrere Ausführungsbeispiele der landwirtschaftlichen Arbeitsmaschine mit leistungsverzweigtem Getriebe dargestellt sind. In der Zeichnung zeigen:
- Fig. 1: eine Prinzipdarstellung des Antriebskonzeptes für eine landwirtschaftliche Arbeitsmaschine, ausgehend von einem Schlepper, gemäß dem Stand der Technik,
- Fig. 2: eine Prinzipdarstellung ähnlich Fig. 1 mit einer nicht erfindungsgemäßen Leistungsverzweigung des die Anbaugeräte einer Arbeitsmaschine antreibenden Getriebes,
- Fig. 3: eine zweite nicht erfindungsgemäße Ausführung des leistungsverzweigten Getriebes ähnlich Fig. 2 mit mehreren Pumpen, und
- Fig. 4: eine dritte nicht erfindungsgemäße Ausführung des leistungsverzweigten Getriebes mit nur einer Pumpe und Wegeventilen zur Ansteuerung des Motors im offenen Hydrauliksystem.

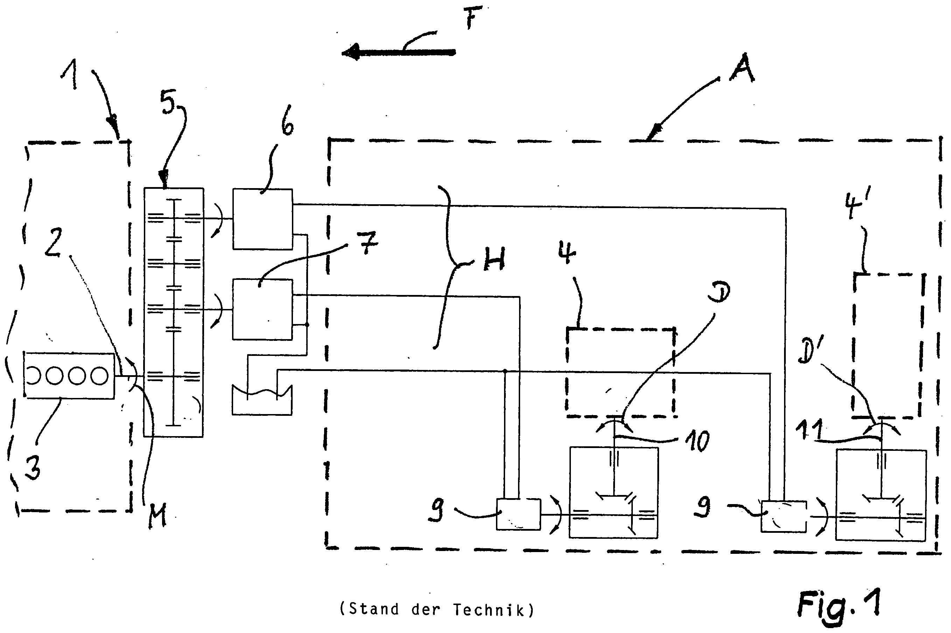

In Fig. 1 ist in einer schematischen Gesamtansicht eine landwirtschaftliche Arbeitsmaschine A gemäß dem Stand der Technik dargestellt. Derartige Arbeitsmaschinen A werden insbesondere mittels eines Schleppers o. dgl. primärer Antriebseinrichtung 1 in einer Fahrtrichtung F auf einer Ackerfläche o. dgl. in Betriebsstellung bewegt. Ausgehend von einer Abtriebsbaugruppe 3 wird dabei über zumindest einen Antriebsstrang 2 ein entsprechendes Drehmoment M auf den Bereich der Arbeitsmaschine A so abgeleitet, dass in deren Bereich zumindest ein Anbaugerät 4, 4' mit einer Antriebsdrehzahl gemäß Pfeil D, D' antreibbar ist. Dabei ist bei bekannten Einrichtungen ein die mechanische Leistung M des Antriebsstrangs 2 aufnehmendes Zwischengetriebe 5 in Form eines Pumpenantriebs vorgesehen, der zumindest eine die mechanische Leistung M in hydraulische Leistung wandelnde Pumpe 6, 7 aufweist (Fig. 1: Stand der Technik mit zwei Pumpen). Das von dieser zumindest einen Pumpe 6, 7 ausgehende Hydrauliksystem H wirkt dabei mit jeweils einem Motor 9 vor jeweiligen Arbeitsabtrieben 10, 11 der hier dargestellten beiden Anbaugeräte 4, 4' zusammen.

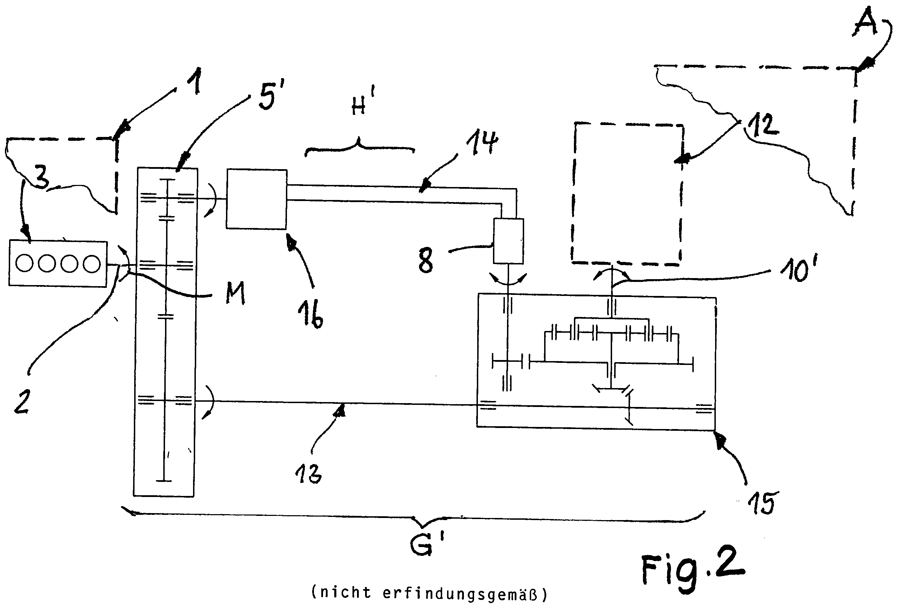

Das Konzept geht - gemäß einer in Fig. 2 dargestellten Grundkonfiguration - davon aus, dass der prinzipiell in einer Struktur gemäß Fig. 1 ausführbare Schlepper-Arbeitsmaschinen-Komplex nunmehr zwischen primärer Antriebseinrichtung 1 und dem zumindest einen Anbaugerät 12 der landwirtschaftlichen Arbeitsmaschine A ein leistungsverzweigtes Getriebe G als funktionalen Antriebsstrang aufweist.
Die Konstruktion geht davon aus, dass das auf einem der Antriebseinrichtung 1 nachgeordneten Zwischengetriebe 5' basierende leistungsverzweigte Getriebe G nunmehr mit einem mechanischen Strang 13 und zumindest einem parallelen hydraulischen Abtrieb 14 des Hydrauliksystems H' versehen ist. Damit wird eine mechanisch-hydraulische Parallelanordnung so konzipiert, dass die zumindest zwei Stränge 13 und 14 über zumindest ein nachgeordnetes Summierungsgetriebe 15 auf den Arbeitsabtrieb 10' des einen Anbaugerätes 12 wirken können. Damit wird erreicht, dass das leistungsverzweigte Getriebe G als eine vergleichsweise einfach zu handhabende Regeleinheit für die Arbeitsmaschine A einsetzbar ist. Mit der zumindest einen in das Hydrauliksystem H', H", H'" integrierten Pumpe 16 und dem zumindest einen auf den Arbeitsabtrieb 10' wirkenden Summierungsgetriebe 15 wird ein System mit weitgehend beliebig erweiterbarer Struktur erreicht.

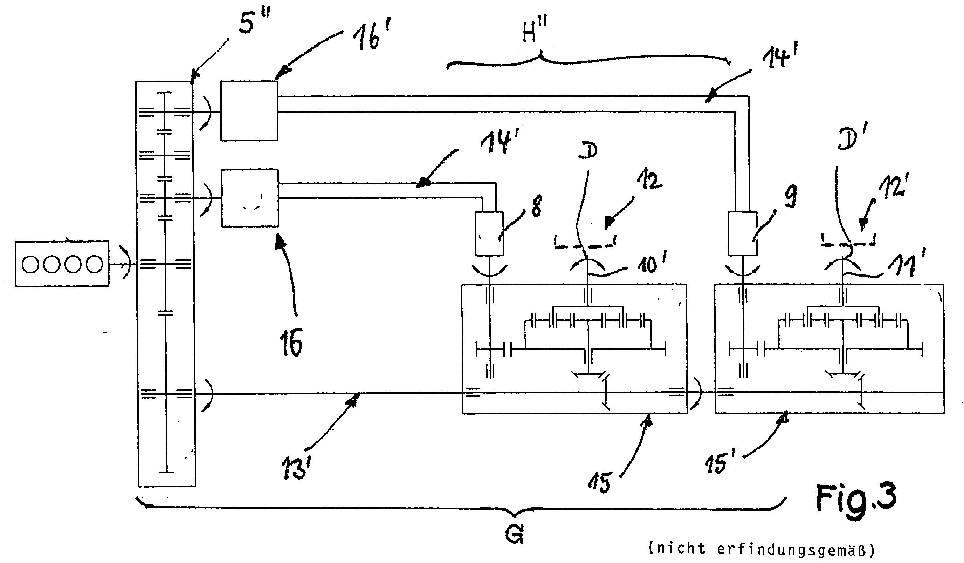

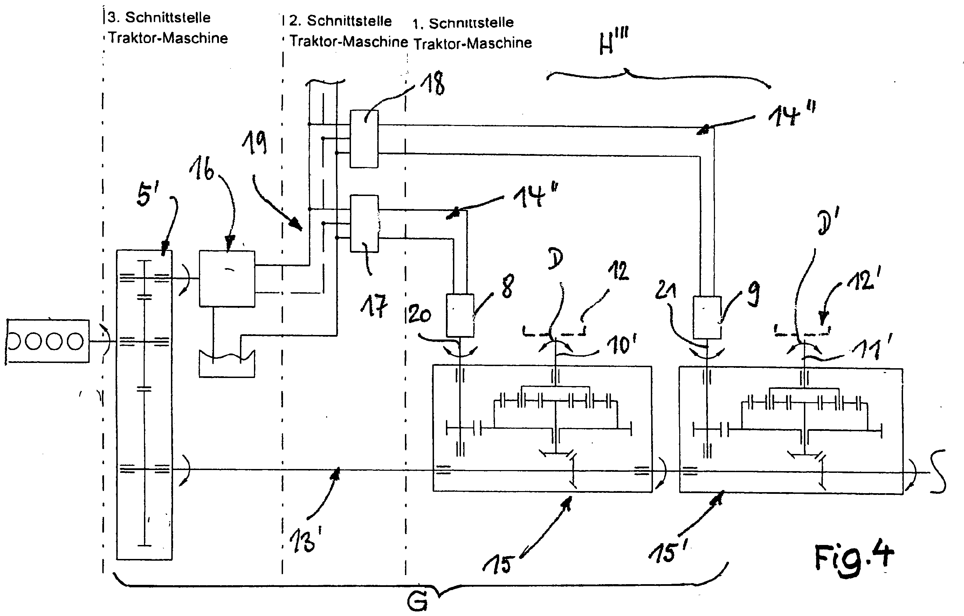

Eine auf die praktischen Anforderungen von Arbeitsmaschinen A gerichtete Optimierung des Grundprinzips gemäß Fig. 2 sieht für Kartoffelroder, Rübenernter o. dgl. Aggregate vor, dass das leistungsverzweigte Getriebe G im Bereich des vom Zwischengetriebe 5' ausgehenden mechanischen Strangs 13 mit mehreren, eine Reihenanordnung bildenden Summierungsgetrieben 15, 15' zusammenwirkt (Fig. 3, Fig. 4). Es versteht sich, dass in diese Summierungsgetriebe 15, 15' jeweils einer der mit dem hydraulischen Strang H", H'" verbundenen Motoren 8, 9 einmündet. Denkbar ist auch eine Erweiterung des Systems mit mehr als zwei Arbeitsabtrieben im Bereich der entsprechenden Anzahl von Summierungsgetrieben (nicht dargestellt).

Aus der Darstellung gemäß Fig. 3 wird deutlich, dass bei der hier dargestellten Ausführung des leistungsverzweigten Getriebes G die beiden Motoren 8 und 9 im Strang vor den Summierungsgetrieben 15 und 15' mit jeweils einer im Bereich des hydraulischen Systems H'" vorgesehenen und vorzugsweise als Verstellpumpe ausgebildeten Pumpe 16 und 16' antreibbar sind.

Eine weitere konstruktive Optimierung des Gesamtsystems führt erfindungsgemäß dazu, dass das leistungsverzweigte Getriebe G insbesondere auch mit nur der einen Pumpe 16 (Fig. 4) betrieben werden kann. Aus der Darstellung in Fig. 4 wird deutlich, dass das leistungsverzweigte Getriebe G im Bereich der nur einen Pumpe 16 an deren Auslassstrang 19 jeweilige, in dem offenen Hydrauliksystem H'" wirkende Wegeventile 17, 18 aufweist. Deren Stränge 14" sind mit dem jeweiligen Motor 8, 9 vor dem Summierungsgetriebe 15, 15' verbindbar, so dass deren variable Drehzahlverstellung über die Beeinflussung des Durchflusses im Bereich der Wegeventile 17, 18 möglich ist.

Mit dieser komplexen Darstellung in Fig. 4 wird gleichzeitig deutlich, dass die Anordnung des leistungsverzweigten Getriebes G mit dem offenen Hydrauliksystem H'" und den Summierungsgetrieben 15 und 15' eine mehrgliedrige funktionale Antriebseinheit mit optimal zueinander angeordneten Baugruppen definiert. Durch jeweilige Strich-Punkt-Linien B, C und E ist hier prinzipiell veranschaulicht, dass diese funktionale Einheit mit leistungsverzweigtem Getriebe G im Bereich eines Schlepper-Maschinen-Komplexes variabel nutzbare Schnittstellen B, C, E definiert. In deren Bereich kann der Komplex jeweils vollständig oder abschnittsweise in Wirkverbindung gebracht werden bzw. ist hier eine jeweilige Trennung des Komplexes möglich. Damit sind unterschiedliche Möglichkeiten der praktischen Umsetzung des erfindungsgemäßen Systems ausführbar, wobei der jeweilige Ausrüstungsumfang im Bereich des Schleppers 1 und/oder der Arbeitsmaschine A zu verschiedenen Optionen führen kann.

Mit der Schnittlinie B wird beispielsweise deutlich, dass das leistungsverzweigte Getriebe G im Bereich jeweiliger, bereits an der primären Antriebseinrichtung 1 vorgesehener Ventile 17, 18 mit den Antriebssträngen 19, 20 zu den Motoren 8, 9 hin kuppelbar ist. Bei dieser ersten Schnittstelle B ist auch der auf die jeweiligen Summierungsgetriebe 15, 15' wirkende mechanische Strang 13 trenn- bzw. kuppelbar.

Mit einer Schnittlinie C wird auf die Anwendung eines Power-Beyond-Anschlusses Bezug genommen. Dieser Anschluss ist zwischen Antriebseinrichtung 1 und Summierungsgetriebe 15, 15' des leistungsverzweigten Getriebes G so angeordnet, dass eine den erforderlichen Volumenstrom vor dem Bereich der Ventile 17, 18 erfassende zweite Schnittstelle definiert werden kann. Es versteht sich, dass in deren Bereich auch der eine - auf mehrere Summierungsgetriebe 15, 15' wirkende - mechanische Strang 13' trenn- bzw. kuppelbar ist.

Mit der Schnittlinie E ist angedeutet, dass das leistungsverzweigte Getriebe G auch eine im Bereich der Arbeitsmaschine A vorgesehene Eigenhydraulik aufweisen kann, wobei sich die in Fig. 4 dargestellte Grundkonstruktion im Bereich der einen Pumpe 16 ergibt.

Das erfindungsgemäße Antriebssystem zeichnet sich dadurch aus, dass die von der Struktur des leistungsverzweigten Getriebes G auch örtlich trennbare Pumpe 16 im Bereich der jeweiligen Summierungsgetriebe 15, 15' mit den Motoren 8, 9 des offenen Hydrauliksystems H'" optimal zusammenwirkt und dabei in Verknüpfung mit dem mechanischen Strang 13 aus dem Zwischengetriebe 5' der jeweilige Arbeitsabtrieb 10', 11' schnell regelbar ist. Für die konstruktive Umsetzung ist vorgesehen, dass im Bereich der jeweiligen Summierungsgetriebe 15, 15' ein Differentialgetriebe oder ein Planetengetriebe über den an eine Zapfwelle gekoppelten ersten Leistungseingang und dem jeweiligen zweiten Leistungseingang der Motoren 8, 9 antreibbar ist.

Die praktische Realisierung der landwirtschaftlichen Arbeitsmaschine 1 wurde beim Einsatz des leistungsverzweigten Getriebes G im Bereich eines gezogenen Kartoffelroders als Arbeitsmaschine A getestet. Dabei wird die von einem Schlepper 1 gebildete Antriebseinrichtung im Einstellmodus des Rodebetriebs mit einer konstanten Drehzahl gefahren. Die Geschwindigkeit in Fahrtrichtung F wird dabei vom Schlepper 1 aus gesteuert. Entsprechend dieser Fahrgeschwindigkeit wird der Kartoffelroder A im Bereich der Gelenkwelle des Antriebsstrangs 2 mit einer konstanten Drehzahl von vorzugsweise 540 U/min bzw. 1000 U/min angetrieben. Im Bereich der Arbeitsmaschine A sind nunmehr mittels des leistungsverzweigten Getriebes G jeweilige Siebbänder, Trenngeräte, Förderer o. dgl. Aggregate so anzutreiben, dass zur Erzielung optimaler Reinigungsergebnisse bei produktschonendem Durchlauf unterschiedliche Baugruppen bzw. Maschinenabschnitte im System mit jeweils variabler Geschwindigkeit zu bewegen sind.

Daraus resultieren im Bereich der Arbeitsabtriebe 10' und 11' unterschiedliche Drehzahlen D, D' für die Anbaugeräte 12, 12'. Im vorgesehenen Rodebetriebszustand wird nunmehr mittels der Pumpe 16 ein Förderstrom über die Ventilscheiben der jeweiligen Wegeventile 17 und 18 auf die jeweiligen hydraulischen Motoren 8 und 9 geleitet. Diese Motoren 8 und 9 treiben nunmehr ihrerseits im Bereich jeweiliger Abtriebe 20, 21 das jeweilige Summierungsgetriebe 15, 15' an. Die Pumpe 16 und die Wegeventile 17, 18 können dabei wahlweise auf dem Schlepper 1 oder der Arbeitsmaschine A angeordnet sein.

Für den Fall, dass im Bereich der jeweiligen Anbaugeräte 12, 12' eine höhere oder niedrigere Antriebsdrehzahl D, D' (entsprechend einem schonenderen oder aggressiveren Reinigungsvorgang) erforderlich wird, erfolgt nunmehr eine Verstellung der jeweiligen Ventilscheiben im Bereich der Wegeventile 17 und/oder 18. Dabei kann der Volumenstrom der geförderten Ölmenge - mit dem die beiden Motoren 8, 9 angetrieben werden - entsprechend der vorgesehenen Verstellung erhöht oder erniedrigt werden. In Folge dieser Verstellungen erfolgt jeweils eine Überlagerung der Drehzahlen im Bereich des jeweiligen Summierungsgetriebes 15, 15', so dass im Bereich des Anbaugerätes 12, 12' eine vorgesehene Veränderung wirksam wird.

Mit diesem Konzept des leistungsverzweigten Getriebes G wird erreicht, dass die dem Drehmoment M zugeordnete Drehzahl am Antriebsstrang 2 des Schleppers 1 konstant gehalten werden kann und gleichzeitig die Drehzahlen D, D' der im Bereich der Arbeitsmaschine A vorgesehenen Anbaugeräte 12, 12' durch eine an den jeweiligen Bedarf angepasste Regelung optimal gesteuert werden können. Die Einstellung der Drehzahlen im Bereich der Anbaugeräte 12, 12' kann dabei vom Nutzer von Hand vorgenommen werden. Denkbar ist auch, dass mittels sensorischer Erfassung eine automatische Regelung installiert wird.

## Patentansprüche

1. Landwirtschaftliche Arbeitsmaschine mit einem Schlepper o. dgl. primärer Antriebseinrichtung (1), von der aus über zumindest einen Antriebsstrang (2) zumindest ein Anbaugerät (12, 12') der Arbeitsmaschine (A) antreibbar ist, wobei ein die mechanische Leistung des Antriebsstrangs (2) aufnehmendes Zwischengetriebe (5) als Zwischenantrieb für zumindest einen die mechanische Leistung (M) umsetzenden Energiewandler, in Form einer Pumpe (6, 7) vorgesehen ist und dabei zumindest ein von diesem Energiewandler ausgehendes Hydrauliksystem (H", H'") mit einem entsprechenden Motor (8, 9) vor dem Arbeitsabtrieb (10', 11') des Anbaugerätes (12, 12') zusammenwirkt, wobei zwischen primärer Antriebseinrichtung (1) und dem zumindest einen Anbaugerät (12, 12') der landwirtschaftlichen Arbeitsmaschine (A) ein leistungsverzweigtes Getriebe (G) vorgesehen ist, das ausgehend von dem der Antriebseinrichtung (1) nachgeordneten Zwischengetriebe (5', 5") mit einem mechanischen Strang (13, 13') und zumindest einem parallelen hydraulischen Abtrieb (14, 14', 14") des Hydrauliksystems (H'; H", H'") versehen ist, derart, dass diese zumindest zwei Stränge (13, 14) über zumindest ein Summierungsgetriebe (15, 15') auf den Arbeitsabtrieb (10', 11') des Anbaugerätes (12, 12') wirken, **dadurch gekennzeichnet, dass** das leistungsverzweigte Getriebe (G) mit nur einer Pumpe (16) versehen ist und dieser am Ende des vorläufigen Strangs (14', 14") des Hydrauliksystems (H", H'") mehrere Summierungsgetriebe (15, 15') mit Arbeitsabtrieb (10', 11') zugeordnet sind, und dass das leistungsverzweigte Getriebe (G) im Bereich der Pumpe (16) auslassseitig (bei 19) jeweilige, in einem offenen Hydrauliksystem (H'") wirkende Wegeventile (17, 18) aufweist und diese mit dem jeweiligen Motor (8, 9) verbindbar sind.

2. Landwirtschaftliche Arbeitsmaschine nach Anspruch 1 , **dadurch gekennzeichnet, dass** das leistungsverzweigte Getriebe (G) mit der zumindest einen in das Hydrauliksystem (H', H", H'") integrierten Pumpe (16) eine auf einen oder mehrere der Arbeitsabtrieb(e) (10', 11') mit jeweiligem Summierungsgetriebe(n) (15, 15') wirkende Regeleinheit bildet.

3. Landwirtschaftliche Arbeitsmaschine nach Anspruch 1 oder 2, **dadurch gekennzeichnet, dass** das leistungsverzweigte Getriebe (G) im Bereich des vom Zwischengetriebe (5) ausgehenden mechanischen Strangs (13) mit mehreren eine Reihenanordnung bildenden Summierungsgetrieben (15, 15') zusammenwirkt und in diese jeweils ein mit dem hydraulischen Strang (H", H'") verbundener Motor (8, 9) einmündet.

4. Landwirtschaftliche Arbeitsmaschine nach einem der Ansprüche 1 bis 3, **dadurch gekennzeichnet, dass** die Anordnung des leistungsverzweigten Getriebes (G) mit offenem Hydrauliksystem (H'") und Summierungsgetriebe (15, 15') eine mehrgliedrige Antriebseinheit definiert, derart, dass diese Einheit vollständig oder abschnittsweise im Bereich von variabel nutzbaren Schnittstellen (B, C, E) des Schlepper-Maschinen-Komplexes (1, A) an diesen anschließbar bzw. von diesem trennbar ist.

5. Landwirtschaftliche Arbeitsmaschine nach Anspruch 4, **dadurch gekennzeichnet, dass** das leistungsverzweigte Getriebe (G) im Bereich jeweiliger, bereits an der primären Antriebseinrichtung (1) vorgesehener Ventile (17, 18) mit den Strängen (14") zu den Motoren (8, 9) hin kuppelbar ist und bei dieser ersten Schnittstelle (B) auch der auf die jeweiligen Summierungsgetriebe (15, 15') wirkende mechanische Strang (13') trenn- bzw. kuppelbar ist.

6. Landwirtschaftliche Arbeitsmaschine nach Anspruch 4, **dadurch gekennzeichnet, dass** ein Power-Beyond-Anschluss zwischen Antriebseinrichtung (1) und Summierungsgetriebe (15, 15') des leistungsverzweigten Getriebes (G) eine den erforderlichen Volumenstrom vor dem Bereich der Ventile (17, 18) erfassende zweite Schnittstelle (C) bildet und in deren Bereich auch der eine mechanische Strang (13') trenn- bzw. kuppelbar ist.

7. Landwirtschaftliche Arbeitsmaschine nach Anspruch 4, **dadurch gekennzeichnet, dass** das leistungsverzweigte Getriebe (G) eine im Bereich der Arbeitsmaschine (A) vorgesehene Eigenhydraulik (bei E) aufweist.

8. Landwirtschaftliche Arbeitsmaschine nach einem der Ansprüche 1 bis 7, **dadurch gekennzeichnet, dass** die örtlich von dem System des leistungsverzweigten Getriebes (G) trennbare Pumpe (16) im Bereich der jeweiligen Summierungsgetriebe (15, 15') mit dem Motor (8, 9) des offenen Hydrauliksystems (H'") zusammenwirkt, derart, dass gemeinsam mit dem mechanischen Strang (13) der jeweilige Arbeitsabtrieb (10', 11') regelbar ist.

9. Landwirtschaftliche Arbeitsmaschine nach einem der Ansprüche 1 bis 8, **dadurch gekennzeichnet, dass** im Bereich der jeweiligen Summierungsgetriebe (15, 15') ein Differentialgetriebe oder ein Planetengetriebe über den an eine Zapfwelle gekoppelten ersten Leistungseingang (bei 2) und den jeweiligen zweiten Leistungseingang (bei 10', 11') der Motoren (8, 9) antreibbar ist.

10. Landwirtschaftliche Arbeitsmaschine nach einem der Ansprüche 1 bis 9, **dadurch gekennzeichnet, dass** ausgehend von dem die mechanische Leistung (M) aufnehmenden Zwischengetriebe (5, 5', 5") das zum mechanischen Strang (13, 13') des leistungsverzweigten Getriebes (G) parallele Elektrosystem mit einem Generator und einem Elektromotor auf das jeweilige Summierungsgetriebe (15, 15') des Anbaugerätes (12, 12') wirkt.

## Claims

1. Agricultural machine comprising a tractor or similar primary drive means (1) by means of which at least one mounted implement (12, 12') of the machine (A) can be driven via at least one drivetrain (2), an intermediate transmission (5) that receives the mechanical power of the drivetrain (2) being provided as an intermediate drive for at least one energy converter, in the form of a pump (6, 7), which transforms the mechanical power (M), at least one hydraulic system (H", H"') that originates from said energy converter thus interacting with a corresponding motor (8, 9) upstream of the operating power take-off (10', 11') of the mounted implement (12, 12'), a power-split transmission (G) being provided between the primary drive means (1) and the at least one mounted implement (12, 12') of the agricultural machine (A), which transmission is provided with a mechanical line (13, 13') and at least one parallel hydraulic power take-off (14, 14', 14") of the hydraulic system (H'; H", H"') originating from the intermediate transmission (5, 5") arranged downstream of the drive means (1), such that said at least two lines (13, 14) act on the operating power take-off (10', 11') of the mounted implement (12, 12') by means of at least one compound transmission (15, 15"), **characterised in that** the power-split transmission (G) is provided with only one pump (16), a plurality of compound transmissions (15, 15') having an operating power take-off (10', 11') being associated with said pump at the end of the preliminary line (14', 14") of the hydraulic system (H", H"'), and **in that** the power-split transmission (G) in each case comprises directional valves (17, 18) in the region of the pump (16), on the outlet side (at 19), which valves act in an open hydraulic system (H"') and can be connected to the relevant motor (8, 9).

2. Agricultural machine according to claim 1, **characterised in that** the power-split transmission (G), together with the at least one pump (16) integrated in the hydraulic system (H', H", H"'), forms a control unit that acts on one or more of the operating power take-off(s) (10', 11') by means of the relevant compound transmission(s) (15, 15').

3. Agricultural machine according to either claim 1 or claim 2, **characterised in that**, in the region of the mechanical line (13) that originates from the intermediate transmission (5), the power-split transmission (G) interacts with a plurality of compound transmissions (15, 15') that form a series arrangement, and a motor (8, 9) connected to the hydraulic line (H", H"') leads into said compound transmissions in each case.

4. Agricultural machine according to any of claims 1 to 3, **characterised in that** the assembly consisting of the power-split transmission (G), the open hydraulic system (H'") and the compound transmissions (15, 15') defines a multi-member drive unit, such that said unit can be connected to and/or separated from versatile interfaces (B, C, E) of the tractor-machine-complex (1, A), completely or in portions, in the region of said interfaces.

5. Agricultural machine according to claim 4, **characterised in that**, in the region of valves (17, 18) that are already provided on the primary drive means (1), the power-split transmission (G) can be coupled to the motors (8, 9) by means of the lines (14"), and the mechanical line (13') that acts on the relevant compound transmission (15, 15') can also be separated and/or coupled at said first interface (B).

6. Agricultural machine according to claim 4, **characterised in that** a power beyond port between the drive means (1) and the compound transmission (15, 15') of the power-split transmission (G) forms a second interface (C) which detects the necessary volumetric flow rate upstream of the region of the valves (17, 18), and in the region of which interface one mechanical line (13') can also be separated or coupled.

7. Agricultural machine according to claim 4, **characterised in that** the power-split transmission (G) comprises inbuilt hydraulics (at E) provided in the region of the machine (A).

8. Agricultural machine according to any of claims 1 to 7, **characterised in that** the pump (16), which can be locally separated from the system of the power-split transmission (G), interacts with the motor (8, 9) of the open hydraulic system (H'") in the region of the relevant compound transmission (15, 15') such that the relevant operating power take-off (10', 11') can be controlled together with the mechanical line (13).

9. Agricultural machine according to any of claims 1 to 8, **characterised in that** a differential or a planetary transmission can be driven, in the region of the relevant compound transmission (15, 15'), by means of the first power input (at 2), which is coupled to a power take-off shaft, and by means of the relevant second power input (at 10', 11') of the motors (8. 9).

10. Agricultural machine according to any of claims 1 to 9, **characterised in that**, beginning at the intermediate transmission (5, 5', 5") that receives the mechanical power (M), the electrical system in parallel with the mechanical line (13, 13') of the power-split transmission (G) acts on the relevant compound transmission (15, 15') of the mounted implement (12, 12') by means of a generator and an electric motor.

## Revendications

1. Machine agricole comprenant un tracteur ou moyen d'entraînement primaire analogue (1), au moyen duquel au moins un élément rapporté (12, 12') de la machine agricole (A) peut être entraînée par le biais d'au moins une chaîne de transmission (2), une transmission intermédiaire (5) recevant la puissance mécanique de la chaîne d'entraînement (2) étant prévu sous la forme d'un entraînement intermédiaire destiné à au moins un convertisseur d'énergie convertissant la puissance mécanique (M), sous la forme d'une pompe (6, 7), et au moins un système hydraulique (H'', H''') partant de ce convertisseur d'énergie coopérant avec un moteur correspondant (8, 9) en amont de la sortie de travail (10', 11') de l'élément rapporté (12, 12'), une transmission à division de puissance (G) étant prévue entre le moyen d'entraînement primaire (1) et l'au moins un élément rapporté (12, 12') de la machine agricole (A), laquelle transmission à division de puissance à partir de la transmission intermédiaire (5', 5'') disposé en aval du moyen d'entraînement (1) étant pourvue d'une ligne de transmission mécanique (13, 13') et d'au moins une sortie hydraulique parallèle (14, 14', 14'') du système hydraulique (H', H'', H''') de sorte que ces au moins deux lignes de transmission (13, 14) agissent par le biais d'au moins une transmission de sommation (15, 15') sur la sortie de travail (10', 11') de l'élément rapporté (12, 12''), **caractérisé en ce que** la transmission à division de puissance (G) est pourvue d'une seule pompe (16) et celle-ci est associée, à l'extrémité de la ligne de transmission provisoire (14', 14'') du système hydraulique (H'', H''') à plusieurs transmissions de sommation (15, 15') munies d'une sortie de travail (10', 11') et **en ce que** la transmission à division de puissance (G) comporte au niveau de la pompe (16), côté sortie (en 19), des distributeurs (17, 18) respectifs agissant dans un système hydraulique ouvert (H''') et ces distributeurs peuvent être raccordés au moteur respectif (8, 9).

2. Machine agricole selon la revendication 1, **caractérisée en ce que** la transmission à division de puissance (G) forme, conjointement avec l'au moins une pompe (16) intégrée dans le système hydraulique (H', H'', H'''), une unité de régulation agissant sur au moins une des sorties de travail (10', 11') avec au moins une transmission de sommation (15, 15').

3. Machine agricole selon la revendication 1 ou 2, **caractérisée en ce que** la transmission à division de puissance (G) coopérant, au niveau de la ligne de transmission mécanique (13) sortant de la transmission intermédiaire (5), avec une pluralité de transmissions de sommation (15, 15') disposées en série dans chacune desquelles débouche un moteur (8, 9) raccordé à la ligne de transmission hydraulique (H'', H''').

4. Machine agricole selon l'une des revendications 1 à 3, **caractérisée en ce que** l'agencement de la transmission à division de puissance (G) avec un système hydraulique ouvert (H''') et une transmission de sommation (15, 15') définit une unité d'entraînement à plusieurs éléments de telle sorte que cette unité peut raccordées entièrement ou partiellement au complexe tracteur-machine (1, A), ou peut être séparé de celui-ci, au niveau des interfaces (B, C, E), utilisables de façon variable, de ce complexe tracteur-machine.

5. Machine agricole selon la revendication 4, **caractérisée en ce que** la transmission à division de puissance (G) peut être accouplée aux lignes de transmission (14''), menant aux moteurs (8, 9), au niveau de distributeurs (17, 18) prévus au niveau du moyen d'entraînement primaire (1) et la ligne de transmission (13') agissant sur la transmission de sommation respective (15, 15') peut également être accouplée ou séparée au niveau de cette première interface (B).

6. Machine agricole selon la revendication 4, **caractérisée en ce qu'**un raccordement Power-Beyond entre le moyen d'entraînement (1) et la transmission de sommation (15, 15') de la transmission à division de puissance (G) forme une deuxième interface (C) détectant le débit volumique requis en amont de la zone des distributeurs (17, 18) et l'une des lignes de transmission mécanique (13') peut également être accouplée ou séparée au niveau de cette interface.

7. Machine agricole selon la revendication 4, **caractérisée en ce que** la transmission à division de puissance (G) comporte sa propre hydraulique (en E) au niveau de la machine agricole (A).

8. Machine agricole selon l'une des revendications 1 à 7, **caractérisée en ce que** la pompe (16), qui peut être séparée localement du système de la transmission à division de puissance (G), coopère au niveau de la transmission de sommation respective (15, 15') avec le moteur (8, 9) du système hydraulique ouvert (H''') de telle sorte que la sortie de travail respective (10', 11') est réglable conjointement avec la ligne de transmission mécanique (13).

9. Machine agricole selon l'une des revendications 1 à 8, **caractérisée en ce que**, au niveau de la transmission de sommation respective (15, 15'), une transmission différentielle ou une transmission à engrenage planétaire peut être entraînée par le biais de la première entrée de puissance (en 2) accouplée à un arbre de prise de force et de la seconde entrée de puissance respective (en 10', 11') des moteurs (8, 9).

10. Machine agricole selon l'une des revendications 1 à 9, **caractérisée en ce que** le système électrique, parallèle à la ligne de transmission mécanique (13, 13') de la transmission à division de puissance (G) et comprenant un générateur et un moteur électrique, agit sur la transmission de sommation respective (15, 15') de l'élément rapporté (12, 12') à partir de la transmission intermédiaire (5, 5', 5'') recevant la puissance mécanique (M).
